# EUROPEAN PATENT APPLICATION

(11) **EP 4 844 471 A1**
(43) Date of publication of application: **25.11.2026**
(21) Application number: 26179065.3
(22) Date of filing: 15.05.2026
(51) Int. Cl.: G02B 27/01

(54) **OPTICAL APPARATUS FOR AUGMENTED REALITY AND APPLICATION THEREOF**

(30) Priority: 19.05.2025 KR 20250064356; 01.04.2026 KR 20260058923
(71) Applicant: Sekonix Co., Ltd, Dongducheon-si, Gyeonggi-do 11307 (KR)
(72) Inventor: KIM, Jin Ho, 16817 GYEONGGI-DO (KR); HONG, Seung Ki, 16699 GYEONGGI-DO (KR); OH, Jin Tek, 11307 GYEONGGI-DO (KR); ROH, Ji Hyung, 16698 GYEONGGI-DO (KR)
(74) Representative: Cabinet Beaumont

(57) **Abstract**

Disclosed are an optical apparatus for augmented reality (AR) and application thereof. The optical apparatus includes an image forming device configured to form a first image and an augmented reality optical system configured to transmit the first image and a second image, which is an external image viewed by a user, to an ocular organ of the user, wherein the augmented reality optical system includes an optical waveguide having an incident surface on which the first image is incident, at least one reflective mirror configured to reflect the first image into the optical waveguide, and at least one partial mirror having characteristics of transmitting the first image and the second image, which is different from the first image, the partial mirror being configured to reflect and transmit the first image, which is reflected by the reflective mirror and transmitted through the optical waveguide, to the ocular organ of the user.

## Description

### CROSS REFERENCE TO RELATED APPLICATION

The present application claims priority to Korean Patent Application Nos. 10-2025-0064356 and 10-2026-0058923, filed May 19, 2025 and April 1, 2026 respectively, the entire contents of which are incorporated herein for all purposes by this reference.

### BACKGROUND OF THE INVENTION

### 1. Field of the invention

The present invention relates to an optical apparatus and application thereof, and more particularly to an optical apparatus for augmented reality and application thereof.

A Korean national and development project supported by the Korean government associated with the present invention is described below:
Project Unique Number : 2410002411
Project Serial Number : 00453508
Government Department : MOTIE (Ministry of Trade, Industry and Energy)
Specialized Institution for Project Management : KEIT (Korea Planning & Evaluation of Industrial Technology)
Title of Research Program : Development of Materials and Components (R&D)
Title of Project : Technology development of qHD grade ultra-small projection optical engine for AR and 4K grade Pancake type light optical module for MR
Performing Institute : SEKONIX CO., LTD.
Research Period : July 1, 2024 ~ December 31, 2027

### 2. Description of the Related Art

With the development of electronic devices and display apparatuses capable of implementing virtual reality (VR), interest in this field is growing. Technologies (methods) capable of realizing augmented reality (AR) and mixed reality (MR) are also being researched as the next step beyond virtual reality (VR). Unlike virtual reality (VR), which is based on a fully virtual world, augmented reality (AR) is a display technology that further enhances the perception of reality by overlaying (or combining) virtual objects or information onto the real-world environment. While virtual reality (VR) is limited to fields such as gaming and virtual experiences, augmented reality (AR) has the advantage of being applicable to a wide variety of real-world environments. In particular, augmented reality (AR) is gaining attention as a next-generation display technology suitable for ubiquitous environments and the Internet of Things (IoT). Such augmented reality (AR) may be considered an example of mixed reality (MR) because augmented reality (AR) blends the real world with additional information (the virtual world).

Apparatuses that implement augmented reality (AR) include an apparatus using diffractive optics and an apparatus using geometric optics. While there are various optical systems available for this purpose, the following limitations exist depending on an AR lens method.

First, in the case of a diffractive waveguide method used to implement augmented reality (AR), the diffraction characteristics differ by wavelength when displaying color images, leading to chromatic aberration caused by diffraction, and there are limitations in securing a sufficient field of view (angle of view).

Second, in the case of birdbath optics, the limitations on lens thickness when used as an AR lens lead to discomfort during outdoor wear, and issues with see-through characteristics arise when the apparatus is inactive due to brightness problems.

Third, in the case of PinTILT optics, the lens thickness is limited to ensure product performance due to an optical design that avoids the use of a pin mirror, and there are aesthetic and design limitations due to coating of the pin mirror and a collimator mirror. Furthermore, in this regard, problems with see-through characteristics occur when AR is not active.

Therefore, there is a need to develop an optical apparatus for augmented reality (AR) capable of remedying and overcoming the shortcomings and problems of the aforementioned conventional methods. For example, there is a need to develop an optical apparatus for augmented reality (AR) capable of reducing the thickness of a lens, securing excellent see-through characteristics, resolving chromatic aberration issues (i.e., color reproduction issues), and securing a wide field of view, and related technologies.

### SUMMARY OF THE INVENTION

The present invention has been made to remedy and overcome the shortcomings and problems of the aforementioned conventional methods, and it is an object of the present invention to provide an optical apparatus for augmented reality (AR) with superior performance.

It is another object of the present invention to provide an optical apparatus for augmented reality (AR) capable of reducing the thickness of a lens, securing excellent see-through characteristics, resolving chromatic aberration issues (i.e., color reproduction issues), and securing a wide field of view.

It is a further object of the present invention to provide an electronic device/system to which the optical apparatus for augmented reality (AR) is applied.

The objects of the present invention are not limited to the above objects, and other unmentioned objects will be understood by those skilled in the art based on the following description.

In accordance with an embodiment of the present invention, the above and other objects can be accomplished by the provision of an optical apparatus for augmented reality (AR), the optical apparatus including an image forming device configured to form a first image and an augmented reality optical system configured to transmit the first image formed by the image forming device and a second image, which is an external image viewed by a user, to an ocular organ of the user, wherein the augmented reality optical system includes an optical waveguide having an incident surface on which the first image is incident, the optical waveguide being configured to provide movement paths for the first and second images, at least one reflective mirror disposed in the optical waveguide or on the surface of the optical waveguide, the reflective mirror being configured to reflect the first image into the optical waveguide, and at least one partial mirror disposed in the optical waveguide, the partial mirror having characteristics of transmitting the first image transmitted from the incident surface to the reflective mirror and the second image, which is different from the first image, the partial mirror being configured to reflect and transmit the first image, which is reflected by the reflective mirror and transmitted through the optical waveguide, to the ocular organ of the user.

The partial mirror may be a dielectric coating layer.

The optical waveguide may include a first waveguide portion and a second waveguide portion, and the partial mirror may be disposed between the first and second waveguide portions.

Each of both surfaces of the partial mirror may be an aspherical surface in which the curvature in an X-axis direction is different from the curvature in a Y-axis direction.

The partial mirror may be configured not to change an optical path for light transmitted through the partial mirror and to change the optical path for light reflected by the partial mirror.

The partial mirror may have a transmittance of approximately 50 to 80%.

The partial mirror may be provided as one or in plural.

The at least one partial mirror may include a first partial mirror and a second partial mirror, the first partial mirror may be configured to transmit a 1-1 image formed by a first part of the image forming device to the ocular organ of the user, and the second partial mirror may be configured to transmit a 1-2 image formed by a second part of the image forming device to the ocular organ of the user.

The partial mirror may be disposed between the image forming device and the reflective mirror.

The partial mirror may be disposed between the incident surface and the reflective mirror.

The reflective mirror may be a metallic coating layer.

The reflective mirror may be provided as one or in plural.

The image forming device may be disposed above or beside the optical waveguide.

The image forming device may include an organic light emitting diode (OLED) panel or a light emitting diode (LED) panel.

The augmented reality optical system may be configured such that light corresponding to the first image that has entered the optical waveguide through the incident surface is reflected from a first surface portion of the optical waveguide, is transmitted through the partial mirror, is reflected from a second surface portion of the optical waveguide, is reflected from the reflective mirror, is reflected from a third surface portion of the optical waveguide, is reflected from a fourth surface portion of the optical waveguide, is reflected from the partial mirror, and is transmitted to the ocular organ of the user.

The augmented reality optical system may have an F-number of approximately 6 to 12.

The augmented reality optical system may have a field of view (an angle of view) of approximately 20° or more.

The optical waveguide may be configured to reflect light corresponding to the first image a plurality of times through internal reflection.

The optical waveguide may have the form of eyeglass lenses.

The optical apparatus may be an eyeglass-type apparatus or a goggle-type apparatus.

### BRIEF DESCRIPTION OF THE DRAWINGS

FIG. 1 is a view schematically showing an optical apparatus for augmented reality (AR) according to an embodiment of the present invention;
FIG. 2 is a view illustratively showing a movement path of light corresponding to a first image through the optical apparatus for augmented reality (AR) according to the embodiment of FIG. 1;
FIG. 3 is a view three-dimensionally showing the optical apparatus for augmented reality (AR) according to the embodiment of FIG. 2;
FIG. 4 is a view schematically showing an optical apparatus for augmented reality (AR) according to another embodiment of the present invention;
FIG. 5 is a view illustratively showing a movement path of light corresponding to a first image through the optical apparatus for augmented reality (AR) according to the embodiment of FIG. 4;
FIG. 6 is a view describing a method of combining partial images using the optical apparatus for augmented reality (AR) according to the embodiment of FIG. 5;
FIG. 7 is a view three-dimensionally showing the optical apparatus for augmented reality (AR) according to the embodiment of FIG. 4;
FIG. 8 is a view showing an optical apparatus for augmented reality (AR) according to another embodiment of the present invention;
FIGs. 9 and 10 are views showing an optical apparatus for augmented reality (AR) according to another embodiment of the present invention;
FIG. 11 is a view showing an optical apparatus for augmented reality (AR) according to another embodiment of the present invention;
FIG. 12 is a view illustratively showing an optical path of a first image through the optical apparatus for augmented reality (AR) according to the embodiment of FIG. 11;
FIGs. 13 and 14 are views illustratively describing an optical apparatus for augmented reality (AR) according to another embodiment of the present invention; and
FIG. 15 is a photograph illustratively showing an augmented reality optical system applicable to the optical apparatus for augmented reality (AR) according to the embodiment of the present invention.

### DETAILED DESCRIPTION OF THE PREFERRED EMBODIMENTS

Hereinafter, embodiments of the present invention will be described in detail with reference to the accompanying drawings.

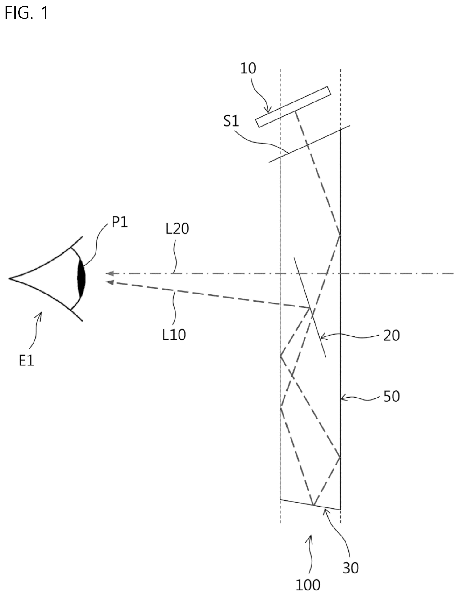

FIG. 1 is a view schematically showing an optical apparatus for augmented reality (AR) according to an embodiment of the present invention.

Referring to FIG. 1, the optical apparatus for augmented reality (AR) according to the embodiment of the present invention may include an image forming device 10 for forming a first image and an augmented reality optical system 100 for transmitting the first image formed by the image forming device 10 and a second image, which is an external image viewed by a user, to an ocular organ E1 of the user, i.e., the eye. The augmented reality optical system 100 may also be referred to as an optical see-through system. Here, reference symbol P1 denotes the pupil of the ocular organ E1.

The image forming device 10 may include, for example, an organic light emitting diode (OLED) display device or a light emitting diode (LED) display device. In other words, the image forming device 10 may include an OLED panel or an LED panel. The LED panel may be a micro-LED panel or a nano-LED panel. The image forming device 10 may be referred to as a type of display device, micro-display device, or nano-display device. However, the specific configuration of the image forming device 10 is not limited to what has been described above, and may be changed.

The light corresponding to the first image is denoted by reference symbol L10, and the light corresponding to the second image is denoted by reference symbol L20. In this specification, the first image may refer to the light L10 corresponding to the first image, and the second image may refer to the light L20 corresponding to the second image. The augmented reality optical system 100 may transmit/guide the first image by the light L10 of a first path and the second image by the light L20 of a second path to the ocular organ E1 of the user. Here, the light L20 of the second path may be light that has passed through the augmented reality optical system 100. The light L10 of the first path may move along a path different from the path of the light L20 of the second path.

The first image transmitted by the light L10 of the first path may be an image that is formed and provided in the optical apparatus for augmented reality (AR). That is, the first image may be an image that is formed and provided by the image forming device 10. The first image may be a "display image," which includes virtual reality or virtual information. The second image transmitted by the light L20 of the second path may be an external image that the user faces through the augmented reality optical system 100. The second image may include an image of the foreground that the user faces, and may include a predetermined background subject. The second image may be an image of the real world. Therefore, the optical apparatus according to the present embodiment may be applied to implement augmented reality (AR). The optical apparatus according to the present embodiment may be referred to as an augmented reality (AR) display device or a multi-image display device.

The augmented reality optical system 100 may include an optical waveguide 50, at least one reflective mirror 30, and at least one partial mirror 20.

The optical waveguide 50 may have an incident surface S1 on which the first image is incident, and may provide movement paths for the first and second images. The optical waveguide 50 may be referred to as a medium layer (medium portion) or a lens layer (lens portion).

The at least one reflective mirror 30 may be disposed in the optical waveguide 50 or on the surface of the optical waveguide 50. The reflective mirror 30 may be configured to reflect the first image into the optical waveguide 50. The reflective mirror 30 may have no or substantially no transmission characteristics.

The at least one partial mirror 20 may be disposed in the optical waveguide 50. The partial mirror 20 may have characteristics of transmitting the first image transmitted from the incident surface S1 to the reflective mirror 30 and the second image, which is different from the first image, and may be configured to reflect and transmit the first image, which is reflected by the reflective mirror 30 and transmitted through the optical waveguide 50, to the ocular organ E1 of the user. The partial mirror 20 may possess both reflection characteristics and transmission characteristics. In this regard, the partial mirror 20 may be referred to as a "reflective and transmissive member." By using the partial mirror 20, it is possible to use the optical path passing through the partial mirror 20 even when the optical waveguide 50 is thin, thereby ensuring excellent see-through characteristics. In addition, by using the partial mirror 20, space savings and a reduction in the thickness of the optical system may be achieved.

In accordance with an embodiment, the partial mirror 20 may be a dielectric coating layer. The partial mirror 20 may be made of a material different from the material of the optical waveguide 50, and may be made of a dielectric material. When light is transmitted through (passes through) the partial mirror 20, the medium on the front side and the medium on the back side of the partial mirror 20 (i.e., the medium before light incidence and the medium after light transmission) may be the same. In this regard, when light is transmitted through the partial mirror 20, there may be no change (effect) or substantially no change (effect) in the optical path. The partial mirror 20 may be configured such that the refractive indices thereof in the optical paths before and after the partial mirror are the same.

The partial mirror 20 may be provided in the optical waveguide 50. The optical waveguide 50 may include a first waveguide portion and a second waveguide portion, and the partial mirror 20 may be disposed between the first and second waveguide portions. When manufacturing the optical waveguide 50, the first waveguide portion and the second waveguide portion may be manufactured separately, the partial mirror 20 may be formed on the surface of one of the first and second waveguide portions by dielectric coating, and the first and second waveguide portions are joined to each other to integrate the first and second waveguide portions, whereby the optical waveguide 50 having the partial mirror 20 provided therein may be manufactured. At this time, in the remaining area excluding the area in which the partial mirror 20 is provided, the boundary between the first and second waveguide portions that is distinguishable to the naked eye may not be substantially formed.

Each of both surfaces of the partial mirror 20 may be an aspherical surface. Each of both surfaces of the partial mirror 20 may be an aspherical surface in which the curvature in an X-axis direction is different from (does not coincide with) the curvature in a Y-axis direction. Each of both surfaces of the partial mirror 20 may be an aspherical surface in which the radius of curvature in the X-axis direction is different from (does not coincide with) the radius of curvature in the Y-axis direction. Here, the X-axis direction may be a horizontal direction in which the partial mirror 20 extends, and the Y-axis direction may be a direction perpendicular to the X-axis direction. The X-axis direction and the Y-axis direction may be determined based on a front view of the partial mirror 20. The partial mirror 20 may have an X/Y asymmetric aspherical surface. In accordance with an embodiment, by applying an asymmetric aspherical coating layer in which the radii of curvature in the X-axis and Y-axis directions do not coincide with each other (i.e., X radius of curvature ≠ Y radius of curvature) to the partial mirror 20, it is possible to adjust the value of diopter in a reflection path and to easily correct the aberration of an image entering the pupil P1.

In accordance with an embodiment, the partial mirror 20 may be configured to change the optical path only for the light reflected by the partial mirror without changing or substantially changing the optical path for the light that is transmitted through the partial mirror. When the light L10 corresponding to the first image transmitted from the incident surface S1 to the reflective mirror 30 is transmitted through the partial mirror 20, the optical path thereof may not be changed or may not be substantially changed by the partial mirror 20. Furthermore, when the light L20 corresponding to the second image, which is an external image, is transmitted through the partial mirror 20, the optical path thereof may not be changed or may not be substantially changed by the partial mirror 20. However, when the light L10 corresponding to the first image, which is reflected by the reflective mirror 30 and transmitted through the optical waveguide 50, is reflected by the partial mirror 20 and transmitted to the ocular organ E1, the partial mirror 20 may change the path of the light L10 through reflection. To satisfy these characteristics, the shape, structure, and disposition of the partial mirror 20 may be determined. The partial mirror 20 may be disposed so as to be closer (nearer) to a vertical plane than to a horizontal plane.

If the partial mirror 20 is configured not to change or substantially change the optical path for the light transmitted through the partial mirror and to change the optical path only for the light reflected by the partial mirror, the optical apparatus according to the embodiment may exhibit superior augmented reality (AR) display characteristics.

In accordance with an embodiment, the partial mirror 20 may have a transmittance of approximately 50% or more. For example, the partial mirror 20 may have a transmittance of approximately 50 to 80% or approximately 70 to 80%. By securing a high transmittance of approximately 50 to 80% or approximately 70 to 80%, good see-through characteristics may be ensured even when an AR mode is not active.

The partial mirror 20 may be provided as one or in plural. The partial mirror 20 may have characteristics that make it difficult for the user's eye, i.e., the ocular organ E1, to see the partial mirror. Particularly, if the partial mirror 20 is divided into a plurality of units and each unit is relatively small in size, the partial mirror may be barely visible to the user. This principle is similar to why baseball field backstop netting is barely visible when a camera installed behind the netting films action on the field. That is, the partial mirror may be designed such that the focal position of the image formed through the augmented reality optical system 100 is set to approximately 1 m or more or approximately 1.5 m or more using the principle by which the net does not appear in the image due to the difference in focal positions between an object (player) far from a lens and an object (netting) immediately in front of the lens, whereby the plurality of divided partial mirrors is not visible to the user wearing the optical apparatus. When using the plurality of partial mirrors, visual transparency resulting from the difference in focal positions may be used to ensure that the boundary between the partial mirrors dividing the image is invisible to the user, thereby achieving a smooth full screen without any distractions.

The partial mirror 20 may be disposed between the image forming device 10 and the reflective mirror 30. In addition, the partial mirror 20 may be disposed between the incident surface S1 of the optical waveguide 50 and the reflective mirror 30. The partial mirror 20 may be disposed at a central portion of the optical waveguide 50 or at an area adjacent thereto. The incident surface S1 and the reflective mirror 30 may be disposed on opposite sides in the state in which the partial mirror 20 is interposed therebetween.

In an example, the reflective mirror 30 may be a metallic coating layer. The reflective mirror 30 may be made of a metallic material (metal material) having excellent reflective properties. As a non-limiting example, the reflective mirror 30 may be made of silver (Ag) or may include silver (Ag). The reflective mirror 30 may be provided on the surface of the optical waveguide 50, but in some cases, the reflective mirror may be provided in the optical waveguide 50. When the reflective mirror 30 is provided on the surface of the optical waveguide 50, the reflective mirror 30 may be provided on an outer surface, such as a lower surface or a side surface, of the optical waveguide 50. In accordance with an embodiment, the reflective mirror 30 may be disposed so as to be closer (nearer) to the horizontal plane than to the horizontal plane. In addition, the reflective mirror 30 may be provided as one or in plural.

In an example, the image forming device 10 may be disposed above or beside the optical waveguide 50. FIG. 1 shows the case in which the image forming device 10 is disposed above the optical waveguide 50. The image forming device 10 may be disposed above an upper surface of the optical waveguide 50 so as to be adjacent to the optical waveguide 50 or to be spaced apart from the optical waveguide 50. In this case, the incident surface S1 may be defined on the upper surface of the optical waveguide 50. The incident surface S1 may be a horizontal plane, a plane close to the horizontal plane, or a plane inclined with respect to the horizontal plane. However, in some cases, the position of the image forming device 10 and the positional relationship between the image forming device 10 and the optical waveguide 50 may be changed.

The optical waveguide 50 may be configured to reflect the light L10 corresponding to the first image one or more times through internal reflection. For example, the optical waveguide 50 may be configured to reflect the light L10 corresponding to the first image a plurality of times through internal reflection. The internal reflection may be a total reflection or a reflection close to total reflection occurring at a boundary surface of the optical waveguide 50. The internal reflection may occur at each of the front side and the rear side of the optical waveguide 50.

In an example, the augmented reality optical system 100 may have an F-number of approximately 6 to 12. The aperture ratio may be optimized to achieve an F-number of approximately 6 to 12. An F-number of approximately 6 or more may deepen the depth of field of an image, thereby improving image quality. An F-number of approximately 12 or less may serve as an upper limit to prevent a decrease in optical efficiency. The distance from the image forming device 10 to the reflective mirror 30 may be a key factor in determining the F-number. The reflective mirror 30 may be a total internal reflection mirror and, may be, for example, a metal coating layer.

In accordance with the embodiment, the image (i.e., the first image) formed by the image forming device 10 may be transmitted through the high-transmittance partial mirror 20, whereby it is possible to implement an optical system that is thin yet has a sufficient F-number. In this case, the F-number may be approximately 6 to 12. This F-number range allows for increased depth of field of an image, improved image quality, and enhanced light efficiency.

In addition, the augmented reality optical system 100 may have a field of view (angle of view) of approximately 20° or more or approximately 30° or more for a virtual display image. The augmented reality optical system 100 may have a field of view of approximately 40° or more. In other words, the optical apparatus for augmented reality (AR) according to the embodiment may have a field of view of approximately 20° or more, approximately 30° or more, or approximately 40° or more. The optical apparatus for augmented reality (AR) may have a field of view of approximately 40° or more or approximately 60° or more. The field of view may be approximately 100° or more. In particular, when the image from the image forming device 10 is divided into two or more parts and the two or more image parts are transmitted to the pupil P1 at different angles of incidence, a much larger field of view may be easily achieved than when a single image is transmitted to the pupil. To this end, a plurality of partial mirrors 20 may be employed.

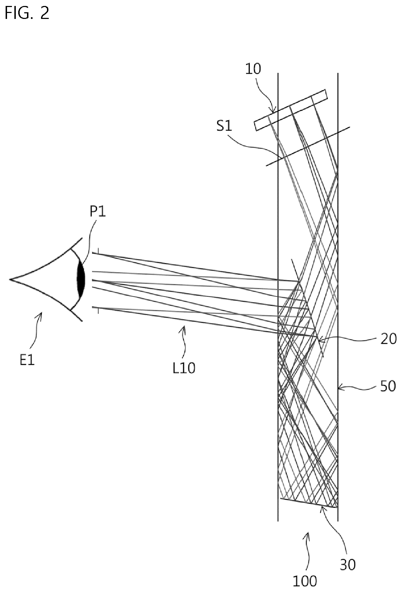

FIG. 2 is a view illustratively showing the movement path of the light L10 corresponding to the first image through the optical apparatus for augmented reality (AR) according to the embodiment of FIG. 1. FIG. 2 shows an area-specific optical path in more detail.

Referring to FIG. 2, the optical apparatus for augmented reality (AR) according to the embodiment may have the configuration described with reference to FIG. 1. In a specific example, the augmented reality optical system 100 may be configured such that the light L10 corresponding to the first image, which has entered the optical waveguide 50 through the incident surface S1, is reflected from a first surface portion of the optical waveguide 50, is transmitted through the partial mirror 20, is reflected from a second surface portion of the optical waveguide 50, is reflected from the reflective mirror 30, is reflected from a third surface portion of the optical waveguide 50, is reflected from a fourth surface portion of the optical waveguide 50, is reflected from the partial mirror 20, and is transmitted to the ocular organ E1 of the user.

Each of the first to fourth surface portions of the optical waveguide 50 may be a boundary surface portion of the optical waveguide 50. The first and third surface portions of the optical waveguide 50 may be a front surface portion of the optical waveguide 50, and the second and fourth surface portions of the optical waveguide 50 may be a rear surface portion of the optical waveguide 50. The second surface portion and the fourth surface portion of the optical waveguide 50 may at least partially overlap each other. Reflection by the optical waveguide 50 may be internal reflection, total internal reflection, or reflection close to total internal reflection.

However, the movement path of the light L10 corresponding to the first image described with reference to FIG. 2 is illustrative and may be changed depending on the circumstances. For example, the number and position of internal reflections (total internal reflections) occurring in the optical waveguide 50 may be changed. In a specific example, at least one of reflection from the second surface portion of the optical waveguide 50, reflection from the third surface portion of the optical waveguide 50, and reflection from the fourth surface portion of the optical waveguide 50 may be omitted. In addition, various other changes are possible.

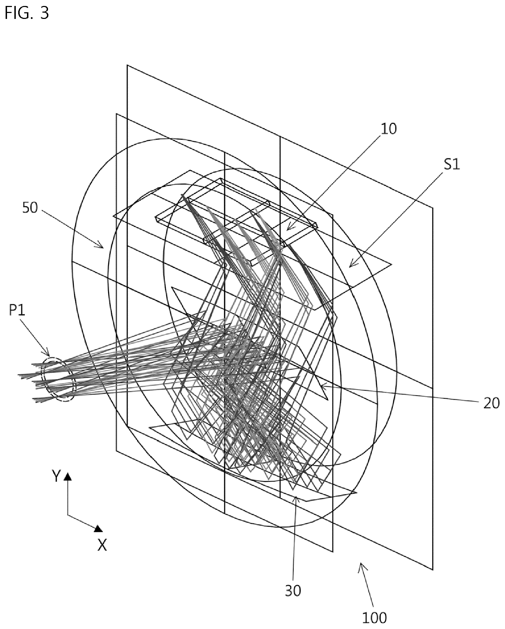

FIG. 3 is a view three-dimensionally showing the optical apparatus for augmented reality (AR) according to the embodiment of FIG. 2.

Referring to FIG. 3, a reflective surface of the reflective mirror 30 may be at least partially curved. In an example, the reflective surface of the reflective mirror 30 may be slightly concave relative to the center of the optical waveguide 50. However, the specific structure of the optical apparatus shown in FIG. 3 and the disposition of components constituting the optical apparatus are illustrative and may be changed depending on the circumstances.

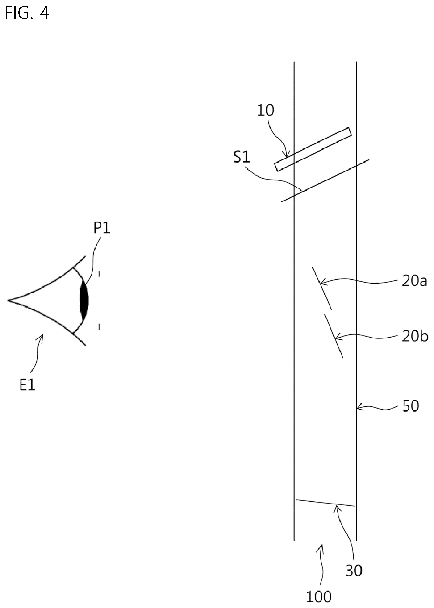

FIG. 4 is a view schematically showing an optical apparatus for augmented reality (AR) according to another embodiment of the present invention.

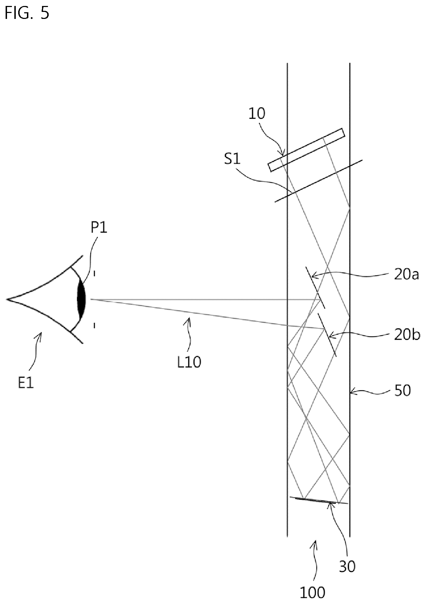

FIG. 5 is a view illustratively showing a movement path of light L10 corresponding to a first image through the optical apparatus for augmented reality (AR) according to the embodiment of FIG. 4.

Referring to FIGs. 4 and 5, the optical apparatus for augmented reality (AR) according to the present embodiment may include an image forming device 10 for forming a first image and an augmented reality optical system 100 for transmitting the first image formed by the image forming device 10 and a second image, which is an external image viewed by a user, to an ocular organ E1 of the user.

The augmented reality optical system 100 may include an optical waveguide 50, at least one reflective mirror 30, and a plurality of partial mirrors 20a and 20b. The optical waveguide 50 may have an incident surface S1 on which the first image is incident, and may provide movement paths for the first and second images. The reflective mirror 30 may be disposed in the optical waveguide 50 or on the surface of the optical waveguide 50, and may be configured to reflect the first image into the optical waveguide 50. The plurality of partial mirrors 20a and 20b may be disposed in the optical waveguide 50. The plurality of partial mirrors 20a and 20b may have characteristics of transmitting the first image transmitted from the incident surface S1 to the reflective mirror 30 and the second image, which is different from the first image, and may be configured to reflect and transmit the first image, which is reflected by the reflective mirror 30 and transmitted through the optical waveguide 50, to the ocular organ E1 of the user.

The plurality of partial mirrors 20a and 20b may include two or more partial mirrors. For example, the plurality of partial mirrors 20a and 20b may include a first partial mirror 20a and a second partial mirror 20b. The plurality of partial mirrors 20a and 20b may be spaced apart from each other. The plurality of partial mirrors 20a and 20b may serve to divide the first image formed by the image forming device 10 and to transmit the divided first images to the pupil P1. That is, the plurality of partial mirrors 20a and 20b may serve to divide the first image formed by the image forming device 10 into two or more parts and to transmit the two or more first image parts to the pupil P1 at different angles of incidence. When the image from the image forming device 10 is divided into two or more parts and the two or more first image parts are transmitted to the pupil P1 at different angles of incidence, a larger image may be transmitted to the pupil P1 and a wide field of view may be easily achieved than when a single image is transmitted to the pupil.

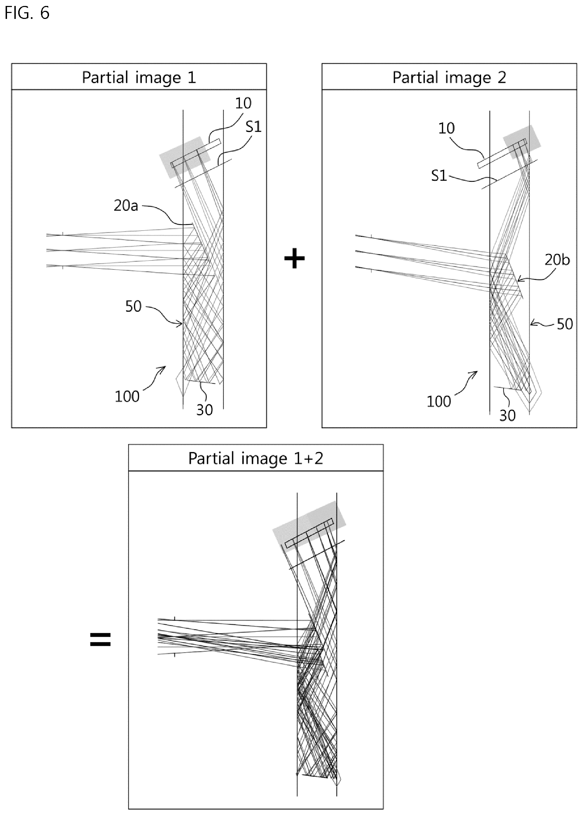

FIG. 6 is a view describing a method of combining partial images using the optical apparatus for augmented reality (AR) according to the embodiment of FIG. 5.

Referring to FIG. 6, the optical apparatus for augmented reality (AR) according to the present embodiment may have the same configuration as described with reference to FIGs. 4 and 5. The plurality of partial mirrors may include first and second partial mirrors 20a and 20b. In FIG. 6, a first view shows the transmission of a first partial image by the first partial mirror 20a, a second view shows the transmission of a second partial image by the second partial mirror 20b, and a third view shows that the first partial image and the second partial image are combined and displayed to the user as a single image.

The first partial mirror 20a may be configured to transmit a 1-1 image (i.e., the first partial image) formed by a first part of the image forming device 10 to the ocular organ of the user, and the second partial mirror 20b may be configured to transmit a 1-2 image (i.e., the second partial image) formed by a second part of the image forming device 10 to the ocular organ of the user. The 1-1 image and the 1-2 image may be transmitted to (incident on) the ocular organ of the user. The 1-1 image and the 1-2 image may be combined and displayed to the user as a single image.

In relation to the principle of the embodiment described with reference to FIG. 6, the optical apparatus for augmented reality (AR) according to the embodiment of the present invention may be referred to as a "differential image waveguide optical apparatus for augmented reality." The optical apparatus for augmented reality (AR) according to the embodiment may basically be an apparatus using geometric optics, or may be an apparatus using differential image waveguide optics. The technology according to the embodiment is based on geometric optics, and in particular, is capable of resolving the trade-off between "thickness" and "field of view," which is a chronic problem with AR apparatuses (glasses), through a unique method known as "image segmentation and composition."

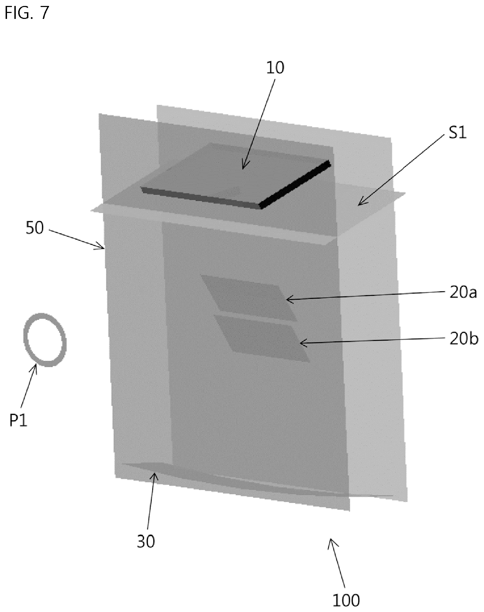

FIG. 7 is a view three-dimensionally showing the optical apparatus for augmented reality (AR) according to the embodiment of FIG. 4. The configuration of the optical apparatus of FIG. 7 may be easily understood from the description given with reference to FIGs. 4 and 5.

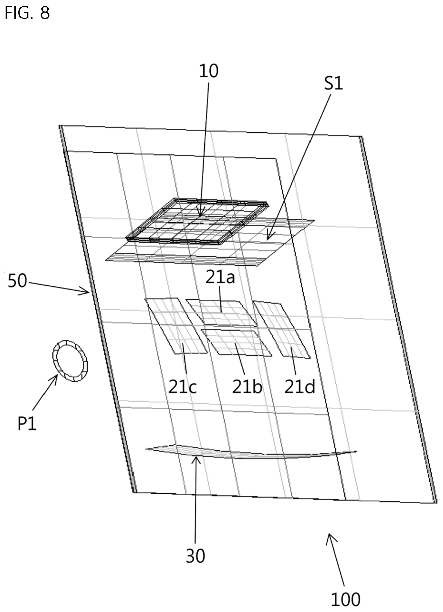

If the optical apparatus for augmented reality (AR) according to the embodiment includes a plurality of partial mirrors, the number and disposition of the plurality of partial mirrors are not limited to what is described with reference to FIGs. 4 to 7 and may be variously changed. Two, three, four, or five or more partial mirrors may be used, and the partial mirrors may be disposed in various ways. Optical apparatuses according to various embodiments are shown in FIGs. 8 to 10.

FIG. 8 is a view showing an optical apparatus for augmented reality (AR) according to another embodiment of the present invention.

Referring to FIG. 8, the optical apparatus for augmented reality (AR) according to the present embodiment may include a plurality of partial mirrors 21a to 21d. The plurality of partial mirrors 21a to 21d may include first to fourth partial mirrors 21a to 21d. The first and second partial mirrors 21a and 21b may be spaced apart from each other in a vertical direction, and the third and fourth partial mirrors 21c and 21d may be spaced apart from each other in a horizontal direction. The first and second partial mirrors 21a and 21b may be disposed between the third and fourth partial mirrors 21c and 21d. The first to fourth partial mirrors 21a to 21d may be disposed so as to form an overall approximately quadrangular shape. The first and second partial mirrors 21a and 21b may be elongated in a roughly horizontal direction, and the third and fourth partial mirrors 21c and 21d may be elongated in a roughly vertical direction.

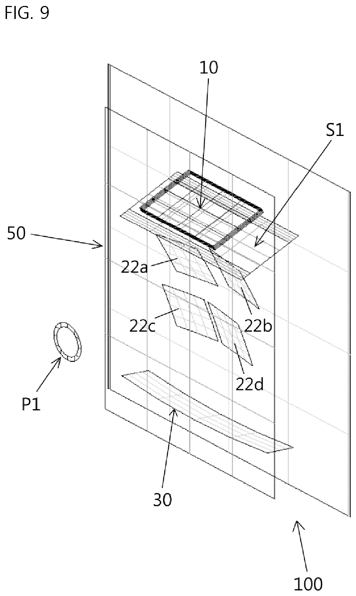

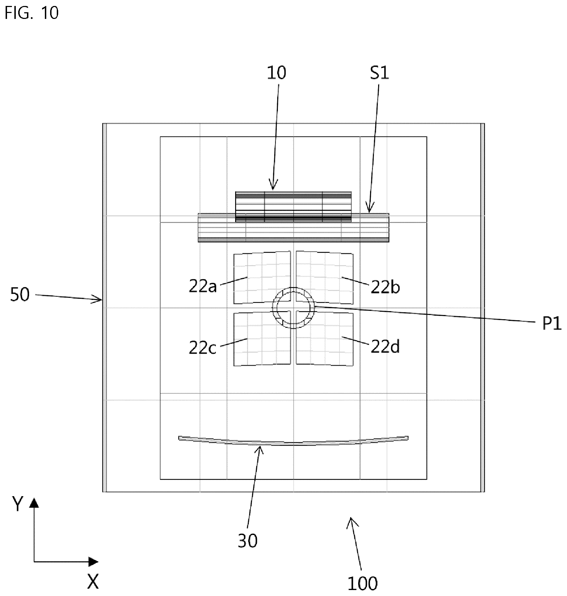

FIGs. 9 and 10 are views showing an optical apparatus for augmented reality (AR) according to another embodiment of the present invention. FIG. 9 is a perspective view, and FIG. 1 is a rear view (plan view).

Referring to FIGs. 9 and 10, the optical apparatus for augmented reality (AR) according to the present embodiment may include a plurality of partial mirrors 22a to 22d. The plurality of partial mirrors 22a to 22d may include first to fourth partial mirrors 22a to 22d. The first and second partial mirrors 22a and 22b may be spaced apart from each other in the horizontal direction, and the third and fourth partial mirrors 22c and 22d may be spaced apart from each other in the horizontal direction. Each of the third and fourth partial mirrors 22c and 22d may be disposed under a corresponding one of the first and second partial mirrors 22a and 22b. The first to fourth partial mirrors 22a to 22d may be disposed so as to form an overall roughly quadrangular shape, and may be arranged in a 2×2 array when viewed from the front. When viewed from the front, the pupil P1 may be located at the center of the area in which the plurality of partial mirrors 22a to 22d are arranged or in an area adjacent thereto.

However, the number and disposition of the plurality of partial mirrors described with reference to FIGs. 8 to 10 may be variously changed.

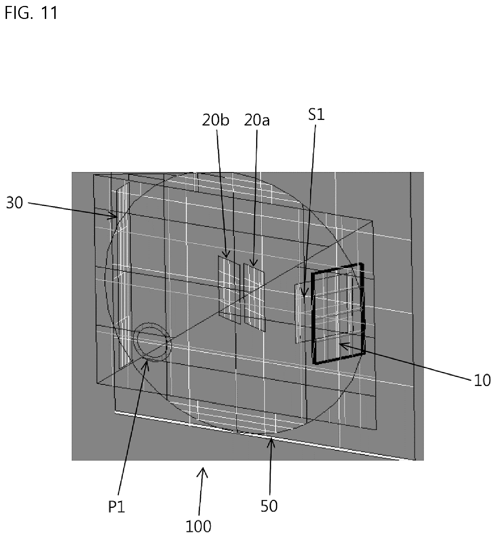

FIG. 11 is a view showing an optical apparatus for augmented reality (AR) according to another embodiment of the present invention.

Referring to FIG. 11, in the optical apparatus for augmented reality (AR) according to the present embodiment, an image forming device 10 may be disposed beside an optical waveguide 50. The image forming device 10 may be disposed beside the optical waveguide 50 so as to be adjacent to or spaced apart from the optical waveguide 50. In this case, the incident surface S1 may be defined on a side surface of the optical waveguide 50.

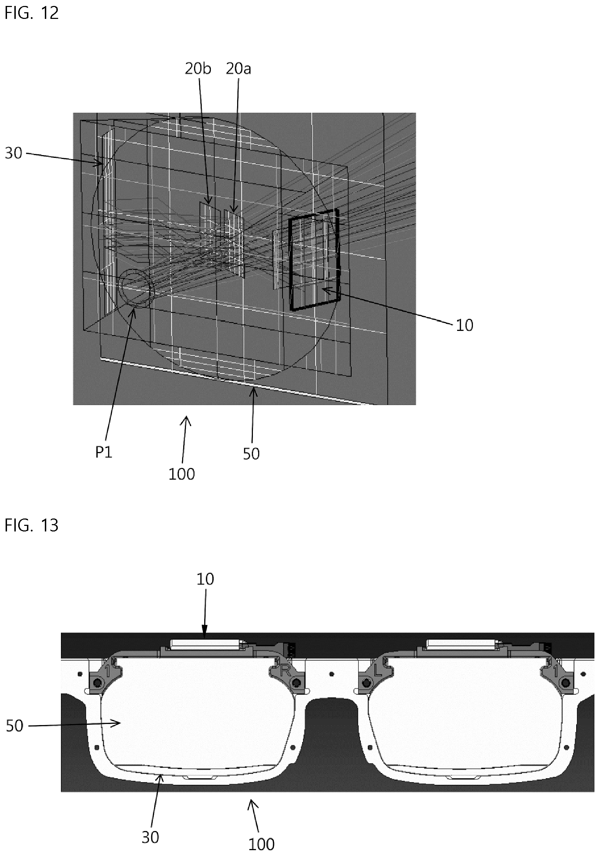

FIG. 12 is a view illustratively showing an optical path of a first image through the optical apparatus for augmented reality (AR) according to the embodiment of FIG. 11.

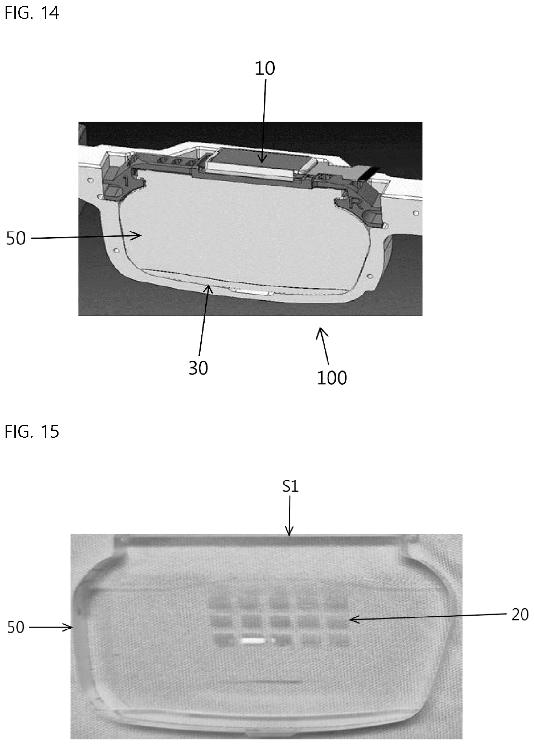

FIGs. 13 and 14 are views illustratively describing an optical apparatus for augmented reality (AR) according to another embodiment of the present invention. FIG. 13 is a front view, and FIG. 14 is a partial perspective view.

Referring to Figs. 13 and 14, in the optical apparatus for augmented reality (AR) according to the present embodiment, an optical waveguide 50 may have the form of eyeglass lenses. The optical waveguide 50 may be made of a transparent or highly transparent material. The optical waveguide 50 may include a plastic or glass material. The optical apparatus may be an eyeglass-type apparatus or a goggle-type apparatus. Each of a pair of left and right eyeglass lens units may constitute the optical apparatus. An image forming device 10, an optical waveguide 50, a reflective mirror 30, and a partial mirror (not shown) may be provided in each of the eyeglass lens units. The optical waveguide 50, the reflective mirror 30, and the partial mirror (not shown) may constitute an augmented reality optical system 100.

FIG. 15 is a photograph illustratively showing an augmented reality optical system applicable to the optical apparatus for augmented reality (AR) according to the embodiment of the present invention.

Referring to FIG. 15, the augmented reality optical system may include an optical waveguide 50, and at least one partial mirror 20 may be provided in the optical waveguide 50. Here, the case in which a plurality of partial mirrors 20 is arranged spaced apart from each other is shown. Reference symbol S1 denotes an incident surface. However, the specific configuration of the augmented reality optical system shown in FIG. 15 is merely illustrative and may be variously changed depending on the circumstances.

In accordance with the embodiments of the present invention described above, it is possible to implement an optical apparatus for augmented reality (AR) with excellent performance capable of remedying and overcoming the shortcomings and problems of conventional methods. Furthermore, in accordance with the embodiments of the present invention, it is possible to implement an optical apparatus for augmented reality (AR) capable of reducing the thickness of a lens, securing excellent see-through characteristics, resolving chromatic aberration issues (i.e., color reproduction issues), and securing a wide field of view. Furthermore, in accordance with the embodiments of the present invention, it is possible to implement an electronic device/system to which the optical apparatus for augmented reality (AR) is applied.

In accordance with an embodiment, it is possible to more easily achieve color image implementation than a conventional diffractive waveguide method by using given geometric optics. In accordance with an embodiment, it is possible to achieve a relatively high transmittance of approximately 50% or more or approximately 70 to 80% and to secure excellent see-through characteristics even when an AR mode is inactive. In accordance with an embodiment, it is possible to design an optical system with a smaller thickness than when using conventional birdbath or PinTILT optics. In accordance with an embodiment, it is possible to easily secure a sufficiently wide field of view.

The conventional diffractive waveguide method has the problem that chromatic aberration occurs because diffraction characteristics vary by wavelength, there are limitations in securing a wide field of view (angle of view), and manufacturing difficulty is high due to the nature of a diffractive optical system. The conventional birdbath optics have the problem that the thickness of a lens is large, which may be uncomfortable when worn outdoors, and see-through characteristics are poor when not in use. The conventional PinTILT optics have the problem that there are thickness limitations due to a pin mirror avoidance design in an optical path and coating results in an unnatural appearance. In accordance with the embodiment of the present invention, it is possible to overcome the problems and shortcomings of the aforementioned conventional methods.

The technology according to the embodiment of the present invention may provide a design and configuration capable of simultaneously achieving the clarity of geometric optics and the thin form factor of a waveguide. In particular, it is possible to implement true see-through AR glasses that can be worn comfortably in daily life by maintaining the transmittance of the partial mirror (e.g., dielectric coating layer) at, for example, approximately 50 to 80%. Furthermore, it is possible to resolve the trade-off between the thickness of the optical system and the field of view (angle of view), to achieve a thin optical system and a wide field of view (angle of view), and to implement excellent visual and display characteristics.

As is apparent from the above description, in accordance with embodiments of the present invention, it is possible to implement an optical apparatus for augmented reality (AR) with excellent performance capable of resolving and overcoming the shortcomings and problems of the conventional methods. Furthermore, in accordance with the embodiments of the present invention, it is possible to implement an optical apparatus for augmented reality (AR) capable of reducing the thickness of the lens, securing excellent see-through characteristics, resolving chromatic aberration issues (i.e., color reproduction issues), and securing a wide field of view. Furthermore, in accordance with the embodiments of the present invention, it is possible to implement an electronic device/system to which the optical apparatus for augmented reality (AR) is applied.

In accordance with an embodiment, it is possible to more easily achieve color image implementation than the conventional diffractive waveguide method by using given geometric optics.

In accordance with an embodiment, it is possible to achieve a relatively high transmittance of approximately 50% or more or approximately 70 to 80% and to secure excellent see-through characteristics even when an AR mode is inactive.

In accordance with an embodiment, it is possible to design an optical system with a smaller thickness than when using the conventional birdbath or PinTILT optics.

In accordance with an embodiment, it is possible to easily secure a sufficiently wide field of view (angle of view) .

However, the effects of the present invention are not limited to the above effects, and may be variously expanded without departing from the technical ideas and scope of the present invention.

Preferred embodiments of the present invention have been disclosed herein, and although certain terms are used, they are used in a general sense to facilitate the description and understanding of the invention, and are not intended to limit the scope of the invention. In addition to the embodiments disclosed herein, other modifications based on the technical ideas of the present invention will be apparent to those skilled in the art to which the present invention pertains. It will be apparent to those skilled in the art that the optical apparatus for augmented reality and the application thereof according to the embodiments described with reference to FIGs. 1 to 15 may be subject to various substitutions, changes, and modifications without departing from the technical ideas of the present invention. For example, the optical apparatus for augmented reality according to the embodiment may be implemented in the form of a head-mounted display (HMD), and various other modifications may be possible. The scope of the invention is therefore not to be defined by the embodiments described above but by the technical ideas recited in the appended claims.

## Claims

1. An optical apparatus for augmented reality (AR), the optical apparatus comprising:
an image forming device configured to form a first image; and
an augmented reality optical system configured to transmit the first image formed by the image forming device and a second image, which is an external image viewed by a user, to an ocular organ of the user, wherein
the augmented reality optical system comprises:
an optical waveguide having an incident surface on which the first image is incident, the optical waveguide being configured to provide movement paths for the first and second images;
at least one reflective mirror disposed in the optical waveguide or on a surface of the optical waveguide, the reflective mirror being configured to reflect the first image into the optical waveguide; and
at least one partial mirror disposed in the optical waveguide, the partial mirror having characteristics of transmitting the first image transmitted from the incident surface to the reflective mirror and the second image, which is different from the first image, the partial mirror being configured to reflect and transmit the first image, which is reflected by the reflective mirror and transmitted through the optical waveguide, to the ocular organ of the user.

2. The optical apparatus according to claim 1, wherein the partial mirror is a dielectric coating layer.

3. The optical apparatus according to claim 1, wherein
the optical waveguide comprises a first waveguide portion and a second waveguide portion, and
the partial mirror is disposed between the first and second waveguide portions.

4. The optical apparatus according to claim 1, wherein each of both surfaces of the partial mirror is an aspherical surface in which a curvature in an X-axis direction is different from a curvature in a Y-axis direction.

5. The optical apparatus according to claim 1, wherein the partial mirror is configured not to change an optical path for light transmitted through the partial mirror and to change the optical path for light reflected by the partial mirror.

6. The optical apparatus according to claim 1, wherein the partial mirror is provided as one or in plural.

7. The optical apparatus according to claim 1, wherein
the at least one partial mirror comprises a first partial mirror and a second partial mirror,
the first partial mirror is configured to transmit a 1-1 image formed by a first part of the image forming device to the ocular organ of the user, and
the second partial mirror is configured to transmit a 1-2 image formed by a second part of the image forming device to the ocular organ of the user.

8. The optical apparatus according to claim 1, wherein the partial mirror is disposed between the image forming device and the reflective mirror.

9. The optical apparatus according to claim 1, wherein the partial mirror is disposed between the incident surface and the reflective mirror.

10. The optical apparatus according to claim 1, wherein the reflective mirror is provided as one or in plural.

11. The optical apparatus according to claim 1, wherein the image forming device is disposed above or beside the optical waveguide.

12. The optical apparatus according to claim 1, wherein the augmented reality optical system is configured such that light corresponding to the first image that has entered the optical waveguide through the incident surface is reflected from a first surface portion of the optical waveguide, is transmitted through the partial mirror, is reflected from a second surface portion of the optical waveguide, is reflected from the reflective mirror, is reflected from a third surface portion of the optical waveguide, is reflected from a fourth surface portion of the optical waveguide, is reflected from the partial mirror, and is transmitted to the ocular organ of the user.

13. The optical apparatus according to claim 1, wherein the augmented reality optical system has an F-number of 6 to 12.

14. The optical apparatus according to claim 1, wherein the optical waveguide is configured to reflect light corresponding to the first image a plurality of times through internal reflection.

15. The optical apparatus according to claim 1, wherein the optical waveguide has a form of eyeglass lenses.
